# EUROPEAN PATENT APPLICATION

(11) **EP 3 556 630 A1**
(43) Date of publication of application: **23.10.2019**
(21) Application number: 18196429.7
(22) Date of filing: 25.09.2018
(51) Int. Cl.: B60W 50/14, B60Q 9/00

(54) **BLIND SPOT DETECTING DEVICE ON A MOTORCYCLE**

(30) Priority: 18.04.2018 TW 107205079 U
(71) Applicant: JET OPTOELECTRONICS CO., LTD., Taipei City 114 (TW)
(72) Inventor: LIN, Sheng-Yueh, 106 Taipei City (TW); TSAI, Ke-Yu, 106 Taipei City (TW)
(74) Representative: Becker Kurig Straus

(57) **Abstract**

A blind spot detecting device comprises a detecting module, which is connected to a rear end of a motorcycle and includes a left sensor and a right sensor on its rear left side and rear right side respectively, for detecting approaching objects at a rear left side and a rear right side of the motorcycle at an angle respectively, and transmits respective signals to a circuit board; and a signal displaying module, which is electrically connected with the circuit board and includes a left signal displaying unit and a right signal displaying unit provided respectively on two sides thereof for receiving the respective signals indicating there are objects approaching to the rear left side and the rear right side of the motorcycle from the left sensor and the right sensor and providing warning signals.

## Description

### FIELD OF THE INVENTION

The present invention relates to a blind spot detecting device, and more particularly, to a blind spot detecting device that can be installed at a rear end of a motorcycle to monitor road conditions on both sides thereof to ensure the safety of the motorcyclist.

### BACKGROUND OF THE INVENTION

Many cars are equipped with blind spot detecting systems in order for drivers to monitor the surrounding road conditions and to prevent accidents as a result from visual blind spots. These blind spot detecting systems usually include sensors installed on the both sides or the rear bumpers of the cars to assist drivers in detecting cars and other objects that are in proximity to the sides or the rear ends of the vehicles, and thus it is able to eliminate blind spots. Some may even be used to limit the turning of the cars.

These blind spot detecting systems are not only used for cars. Mass-produced blind spot detecting systems now are also available for motorcycles, in which a 180° wide-angle rear lens can be installed on the helmet. The wide-angle rear lens allows the biker to monitor road conditions behind the biker's back through a head-up display installed on the helmet, so as to reduce blind spots and significantly enhance the safety in riding a motorcycle.

### SUMMARY OF THE INVENTION

However, the aforementioned head-up display requires a projection host device to be installed in close proximity to the biker's head, which produces electromagnetic or other radiations that may be unhealthy to the human body in long-term use. Moreover, the detectable direction of the lens changes with the rotation of the biker's head. For example, when the biker turns his head towards one side, the lens is thus turned to face the same side and will not be able to detect road conditions (such as approaching cars) in the areas at the other side, and thus unexpected events may still occur. Therefore, it cannot effectively ensure the safety of the bikers.

In view of this, the present invention is thus provided by the inventor through years of continuous development and improvements to overcome the shortcomings in the prior art. The present invention is capable of providing adequate safety distance while allowing the biker to properly monitor the road conditions on both sides of the biker's motorcycle to ensure the safety of the biker.

In order to achieve the abovementioned object, the present invention provides a blind spot detecting device, which comprises a detecting module and a signal displaying module. The detecting module is connected to a rear end of a motorcycle and includes a left sensor and a right sensor on its rear left side and its rear right side respectively, for detecting objects approaching to a rear left side and a rear right side of the motorcycle at an angle respectively, and transmitting respective signals to a circuit board. The signal displaying module is electrically connected with the circuit board and includes a left signal displaying unit and a right signal displaying unit on either side thereof for receiving the respective signals indicating there are objects approaching to the rear left side and rear right side of the motorcycle from the left sensor and the right sensor and providing warning signals.

In implementation, the present invention further comprises a driving recorder with a lens disposed at a rear end of the detecting module.

In implementation, the detecting module includes a main body and a support connected with the main body, and the left and right sensors are connected to two rear sides of the main body, and one end of the support is attached to the rear end of the motorcycle.

In implementation, the signal displaying module is a mobile phone, and the left and right signal displaying units respectively form left and right sides of a screen of the mobile phone.

In implementation, the signal displaying module includes a left speaker and a right speaker for receiving the respective signals from the left sensor and the right sensor and producing sounds respectively on left and right sides of the motorcycle.

In implementation, the present invention further comprises a support bar connected to a front end of a head of the motorcycle, and the support bar includes a holder onto which the signal displaying module is positioned.

In implementation, the support bar further includes an intermediate crossbar, and a left bar and a right bar provided symmetrically about the intermediate crossbar on either side thereof, a rear end of the left bar is connected to a left side of the head of the motorcycle, and a rear end of the right bar is connected to a right side of the head of the motorcycle. The signal displaying module is positioned onto the holder of the intermediate crossbar of the support bar.

The foregoing features and advantages of the present invention will become more apparent from the following detailed description taken in conjunction with the accompanying drawings.

### BRIEF DESCRIPTION OF THE DRAWINGS

FIG. 1 is a perspective view of a blind spot detecting device in accordance with the preferred embodiment of the present invention.
FIG. 2 is a perspective view illustrating the detecting module of the blind spot detecting device installed at the rear end of a motorcycle in accordance with the preferred embodiment of the present invention.
FIG. 3 is a schematic view illustrating the use of the blind spot detecting device in accordance with the preferred embodiment of the present invention.
FIG. 4 is a schematic view illustrating the use of the signal displaying module installed on the support bar in accordance with the preferred embodiment of the present invention.

### DETAILED DESCRIPTION OF THE EMBODIMENTS

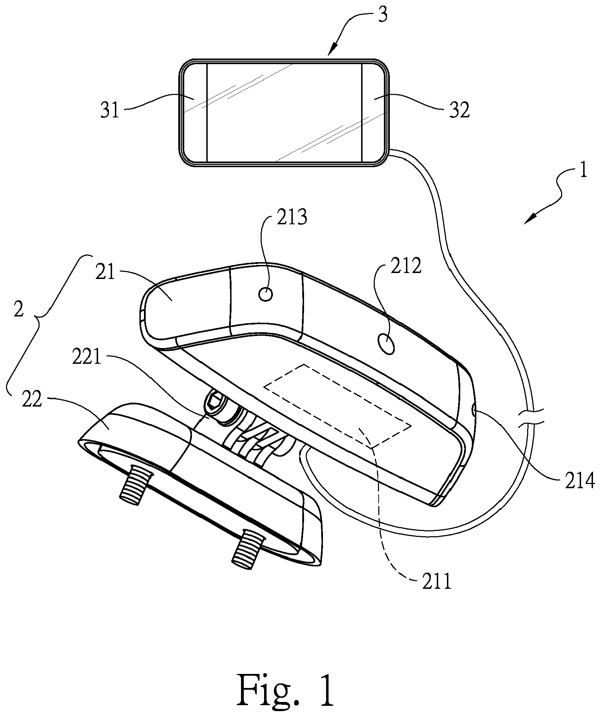

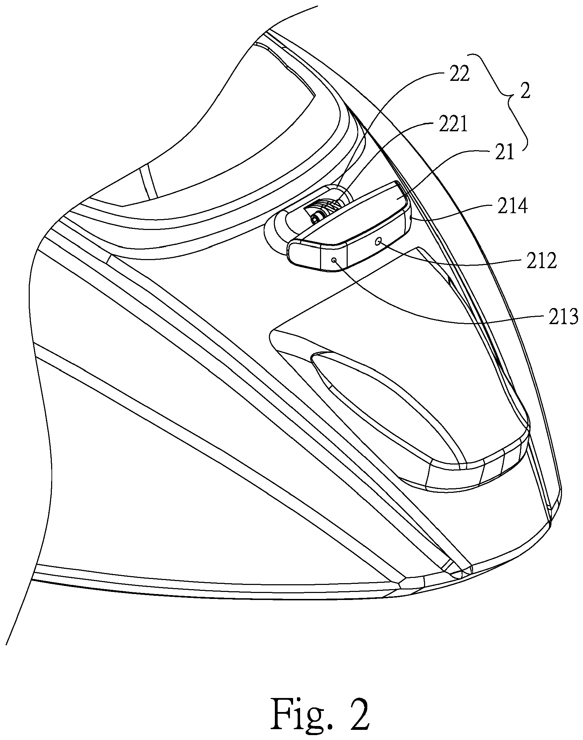

Referring to FIGs. 1 and 2, a blind spot detecting device 1 in accordance with a preferred embodiment of the present invention is shown. The blind spot detecting device 1 comprises a detecting module 2 and a signal displaying module 3. In implementation, the detecting module 2 of the present invention is installed at a rear end of a motorcycle, wherein the direction a biker is facing when riding the motorcycle is defined as the front side of the motorcycle, and the direction the biker's back is facing is defined as the rear side of the motorcycle, and the left and right sides of the motorcycle are defined in relation to the orientation mentioned above.

The detecting module 2 includes a main body 21 and a support 22. The main body 21 is an elongated body with bevel faces on both of left and right sides thereof. A circuit board 211 and a driving recorder are provided inside the main body 21. A lens 212 of the driving recorder is disposed at the rear center of the main body 21 for recording and storing images behind the motorcycle. A left sensor 213 and a right sensor 214 are respectively connected to the left and right sides of the lens 212 at the rear end of the main body 21. The left and right sensors 213, 214 are preferably radar sensors capable of emitting two types of short-wave radar spectrums, that is, microwaves 24 GHz or 77 GHz, for detecting objects near the rear left and right sides at a detectable angle of about 100-120 degrees. If either one of the sensors detects an approaching object (such as a car), the sensor will transmit a signal to the circuit board 211 of the main body 21. The front end of the support 22 is attached to the rear end of the motorcycle via two screws, while the rear end of the support 22 is connected to the front end of the main body 21 via a hinge assembly 221, so that the angle at which the main body 21 is tilted can be adjusted.

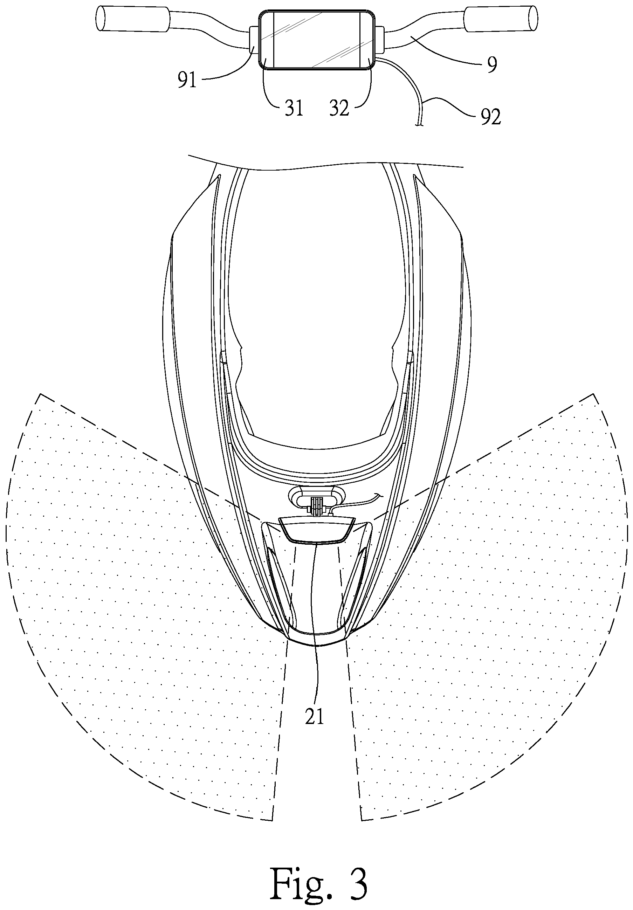

The signal displaying module 3 is a mobile phone. In implementation, the signal displaying module 3 also can be a screen. As shown in FIG. 3, the mobile phone or the screen can be placed onto a holder 91 provided on a handle crossbar 9 at the front end of the motorcycle (such as a scooter or a motorbike), and electrically connected to the circuit board 211 in the main body 21. In implementation, the mobile phone also can be in communication with the circuit board 211 via Bluetooth. Flashing screen zones are provided on the left and right sides of the screen of the mobile phone. The screen zone on the left side of the phone is used as a left signal displaying unit 31, and the screen zone on the right side of the phone is used as a right signal displaying unit 32. In implementation, the left signal displaying unit 31 and the right signal displaying unit 32 also can be installed directly on the head of the motorcycle. The signal displaying module 3 can further include a left speaker and a right speaker installed on the left and right sides of the head of the motorcycle respectively. Alternatively, the left and right speakers also can be installed on the left and right sides of a biker's helmet.

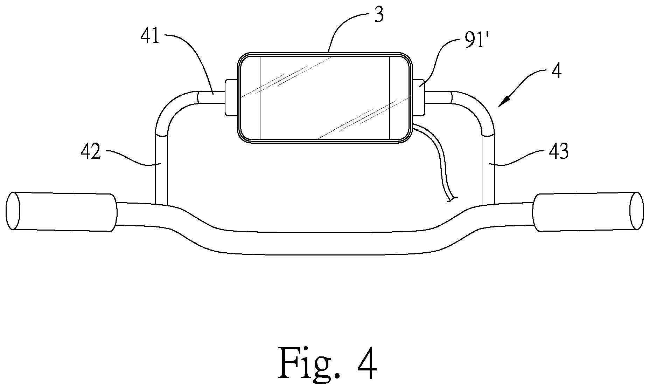

As shown in FIG. 4, the mobile phone also can be positioned onto a holder 91' of a support bar 4, wherein the support bar 4 includes an intermediate crossbar 41, a left bar 42 and a right bar 43. The left bar 42 and the right bar 43 are disposed symmetrically about the intermediate crossbar 41 on its left and right ends. The rear end of the left bar 42 is fastened to the lower left side of the head of the motorcycle, and the rear end of the right bar 43 is fastened to the lower right side of the head of the motorcycle. The signal displaying module 3 is positioned onto the holder 91' of the intermediate crossbar 41.

Accordingly, when one or both of the left sensor 213 and the right sensor 214 detects an object approaching to the rear left or right side of the motorcycle, a signal can be transmitted to the left or right signal displaying unit 31 or 32 by means of the circuit board 211, and indications can be provided in the form of flashing images and/or sounds on the left or right sides of the motorcycle in order to warn the biker not to turn around or lean leftwards or rightwards.

Based on the above disclosure, the present invention has following advantages:
1. The signal displaying module of the present invention is a mobile phone or a screen, which are spaced from the biker in an adequate safety distance in order to effectively prevent electromagnetic or other radiations from harming the body, and thus ensure the safety in use.
2. The present invention allows a biker to monitor the road conditions on both of left and right sides of the biker's motorcycle continuously by means of images or sounds without the need for the biker to turn his head, so as to ensure the safety in riding the motorcycle.

In accordance with the disclosure above, the present invention achieves the anticipated object by providing a blind spot detecting device capable of ensuring the use safety and driving safety. It is novel and has industrial use.

## Claims

1. A blind spot detecting device, comprising:
a detecting module, connected to a rear end of a motorcycle and including a left sensor and a right sensor on its rear left side and its rear right side respectively, for detecting objects approaching to a rear left side and a rear right side of the motorcycle at an angle respectively, and transmitting respective signals to a circuit board; and
a signal displaying module, electrically connected with the circuit board and including a left signal displaying unit and a right signal displaying unit on either side thereof for receiving the respective signals indicating there are objects approaching to the rear left side and the rear right side of the motorcycle from the left sensor and the right sensor and providing warning signals.

2. The blind spot detecting device of claim 1, further comprising a support bar connected to a front end of a head of the motorcycle, and the support bar includes a holder onto which the signal displaying module is positioned.

3. The blind spot detecting device of claim 2, wherein the support bar further includes an intermediate crossbar, and a left bar and a right bar provided symmetrically about the intermediate crossbar on either side thereof, a rear end of the left bar is connected to a left side of the head of the motorcycle, and a rear end of the right bar is connected to a right side of the head of the motorcycle, and the signal displaying module is positioned onto the holder of the intermediate crossbar of the support bar.

4. The blind spot detecting device of claim 1, further comprising a driving recorder with a lens disposed at a rear end of the detecting module.

5. The blind spot detecting device of claim 4, further comprising a support bar connected to a front end of a head of the motorcycle, and the support bar includes a holder onto which the signal displaying module is positioned.

6. The blind spot detecting device of claim 5, wherein the support bar further includes an intermediate crossbar, and a left bar and a right bar provided symmetrically about the intermediate crossbar on either side thereof, a rear end of the left bar is connected to a left side of the head of the motorcycle, and a rear end of the right bar is connected to a right side of the head of the motorcycle, and the signal displaying module is positioned onto the holder of the intermediate crossbar of the support bar.

7. The blind spot detecting device of claim 1, wherein the detecting module includes a main body and a support connected with the main body, and the left and right sensors are connected to two rear sides of the main body, and one end of the support is attached to the rear end of the motorcycle.

8. The blind spot detecting device of claim 7, further comprising a support bar connected to a front end of a head of the motorcycle, and the support bar includes a holder onto which the signal displaying module is positioned.

9. The blind spot detecting device of claim 8, wherein the support bar further includes an intermediate crossbar, and a left bar and a right bar provided symmetrically about the intermediate crossbar on either side thereof, a rear end of the left bar is connected to a left side of the head of the motorcycle, and a rear end of the right bar is connected to a right side of the head of the motorcycle, and the signal displaying module is positioned onto the holder of the intermediate crossbar of the support bar.

10. The blind spot detecting device of claim 1, wherein the signal displaying module is a mobile phone, and the left and right signal displaying units respectively form left and right sides of a screen of the mobile phone.

11. The blind spot detecting device of claim 10, further comprising a support bar connected to a front end of a head of the motorcycle, and the support bar includes a holder onto which the signal displaying module is positioned.

12. The blind spot detecting device of claim 11, wherein the support bar further includes an intermediate crossbar, and a left bar and a right bar provided symmetrically about the intermediate crossbar on either side thereof, a rear end of the left bar is connected to a left side of the head of the motorcycle, and a rear end of the right bar is connected to a right side of the head of the motorcycle, and the signal displaying module is positioned onto the holder of the intermediate crossbar of the support bar.

13. The blind spot detecting device of claim 1, wherein the signal displaying module includes a left speaker and a right speaker for receiving the respective signals from the left sensor and the right sensor and producing sounds respectively on left and right sides of the motorcycle.

14. The blind spot detecting device of claim 13, further comprising a support bar connected to a front end of a head of the motorcycle, and the support bar includes a holder onto which the signal displaying module is positioned.

15. The blind spot detecting device of claim 14, wherein the support bar further includes an intermediate crossbar, and a left bar and a right bar provided symmetrically about the intermediate crossbar on either side thereof, a rear end of the left bar is connected to a left side of the head of the motorcycle, and a rear end of the right bar is connected to a right side of the head of the motorcycle, and the signal displaying module is positioned onto the holder of the intermediate crossbar of the support bar.
